(19) Europäisches Patentamt
European Patent Office
Office européen des brevets

(11) **EP 2 843 831 B1**

(12) **EUROPEAN PATENT SPECIFICATION**

(45) Date of publication and mention
of the grant of the patent:
**23.08.2017 Bulletin 2017/34**

(51) Int Cl.:
*H02P 29/02* *(2016.01)* *H02P 7/29* *(2016.01)*

(21) Application number: **14183133.9**

(22) Date of filing: **02.09.2014**

(54) **MOTOR DRIVE UNIT**

MOTORANTRIEBSEINHEIT

UNITÉ D'ENTRAÎNEMENT DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2013 JP 2013182325**

(43) Date of publication of application:
**04.03.2015 Bulletin 2015/10**

(73) Proprietor: **KABUSHIKI KAISHA TOKAI RIKA DENKI SEISAKUSHO**
**Niwa-gun,**
**Aichi 480-0195 (JP)**

(72) Inventor: **Fujii, Masanori**
**Niwa-gun, Aichi 480-0195 (JP)**

(74) Representative: **Betten & Resch**
**Patent- und Rechtsanwälte PartGmbB**
**Maximiliansplatz 14**
**80333 München (DE)**

(56) References cited:
**EP-A1- 2 164 166       EP-A2- 0 805 555**
**JP-A- H06 225 585     US-A- 5 343 382**
**US-A- 5 457 364       US-A1- 2011 188 163**

EP 2 843 831 B1

**Description**

The present application is based on Japanese patent application No.2013-182325 filed on September 3,2013.

BACKGROUND OF THE INVENTION

1. FIELD OF THE INVENTION

The invention relates to a motor drive unit and, in particular, to a motor drive unit that allows the failure detection of a current feedback system without using a separate failure detection circuit.

2. RELATED ART

A motor drive unit is known that is provided with a motor drive circuit to perform a constant current control of a current flowing through a load of a motor etc. by means of a current feedback system and is provided with an overcurrent detection circuit (see e.g. JP-A-2013-062721).
The motor drive unit has a shunt resistor for detecting a current flowing through the motor as a voltage value and a comparator for comparing the detected voltage with threshold voltage. The threshold voltage is generated by a threshold generation circuit which is configured to increase the threshold voltage with an increase in AC changes of motor current/power supply voltage value and also to increase the threshold voltage with a decrease in temperature of the motor. Thus, desired hysteresis characteristics can be maintained and it is possible to stably detect a failure and to recover from the overcurrent detected state.
Document EP 0 805 555 A2 discloses an inductive load driving method and an H-bridge circuit control device in which an erroneous operation is not caused by noises generated at a current detecting resistor (RS). The current detecting resistor is inserted in an H-bridge circuit constructed to cause the flow of a current to an inductive load (L) in both of forward and reverse directions by four semiconductor switching elements (Q1-Q4) and flywheel diodes (D1-D4) respectively connected in reverse parallel to the semiconductor switching elements. When a current flowing through the inductive load is controlled by a detection voltage (VS) generated by the current detecting resistor, the value of the detection voltage (VS) is ignored immediately after the connection of the inductive load to a power source. When a power source regeneration is made to decrease a switching current, the inductive load is connected to the power source at a predetermined period and a current flowing at that time is detected as the detection voltage (VS).

SUMMARY OF THE INVENTION

The present invention is defined in the independent claim. The dependent claims define advantageous embodiments thereof.
The conventional motor drive unit is not configured to use a part thereof to detect a failure such as overcurrent and it is thus necessary to use a failure detection circuit separate from the motor drive unit. This may cause an increase in circuit space and the number of components.
It is an object of the invention to provide a motor drive unit that allows the failure detection of the current feedback system by using a part of the motor drive unit without using a separate failure detection circuit.

(1) According to one embodiment of the invention, a motor drive unit comprises:

a motor drive circuit that drives a motor by controlling on/off of current;
a control unit generating a drive command signal for driving the motor;
a current feedback circuit that comprises a current detection resistor and a comparator connected in series with the motor and outputs a comparison output signal based on comparison between a current detection signal of a motor current and a target value signal;
a latch circuit that latches a current detection result based on the drive command signal and the comparison output signal; and
a gate circuit for driving the motor drive circuit based on the drive command signal and a latch output signal output from the latch circuit,
wherein the control unit detects a failure of a current feedback system comprising the current feedback circuit and the latch circuit according to a state of the latch output signal inputted after a time measured based on the drive command signal reaches a predetermined time.

In the above embodiment (1) of the invention, the following modifications and changes can be made.

(i) The predetermined time is set to be a time T2 to reach a target current to be set by the target value signal during normal operation.

(ii) When a failure is detected, the control unit changes the drive command signal to turn off the current flowing though the motor.

(iii) The control unit comprises a single chip microcomputer and
wherein the time measured based on the drive command signal is measured by a timer unit built in the single chip microcomputer.

(iv) The control unit determines a failure when the latch output signal is not inverted after the measured time after the measured time reaches the time T2.

(v) The control unit terminates an operation of the failure detection when the latch output signal is inverted after the measured time after the measured time reaches the time T2.

(vi) The control unit outputs at least once the drive command signal in a motor drive command time T1 greater than the time T2.

Effects of the invention

According to one embodiment of the invention, a motor drive unit can be provided that allows the failure detection of the current feedback system by using a part of the motor drive unit without using a separate failure detection circuit.

BRIEF DESCRIPTION OF THE DRAWINGS

Next, the present invention will be explained in more detail in conjunction with appended drawings, wherein:

FIG.1 is a schematic block diagram illustrating a motor drive unit in an embodiment of the present invention;
FIG.2 is a circuit diagram illustrating the motor drive unit in the embodiment of the invention;
FIG.3 is a diagram illustrating signal waveforms of respective portions during normal operation of the motor drive unit in the embodiment of the invention;
FIG.4 is a flowchart showing an operation to detect a failure of a current feedback system in the motor drive unit; and
FIG.5 is a diagram illustrating signal waveforms of respective portions when a failure occurs in the motor drive unit in the embodiment of the invention.

DESCRIPTION OF THE PREFERRED EMBODIMENT

Overall structure of motor drive unit **1**

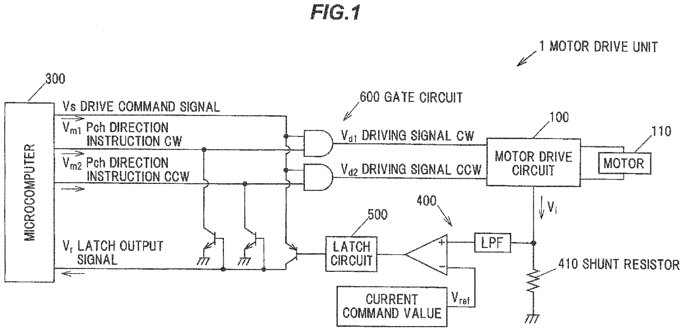

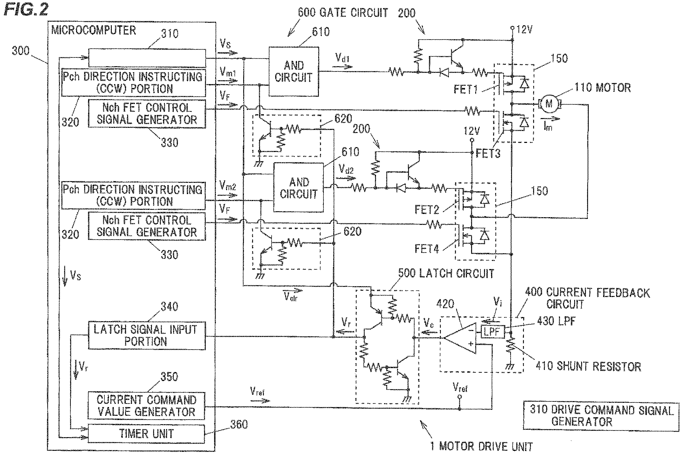

**FIG.1** is a schematic block diagram illustrating a motor drive unit in the embodiment of the invention and **FIG.2** is a circuit diagram illustrating the motor drive unit in the embodiment of the invention.

The motor drive unit **1** in the embodiment of the invention has a motor drive circuit **100** which drives a motor **110** by controlling on/off of current, a microcomputer **300** as a control unit generating a drive command signal $V_s$ for driving the motor **110,** a current feedback circuit **400** which is composed of a shunt resistor **410** as a current detection resistor and a comparator **420** connected in series with the motor **110** and outputs a comparison output signal $V_c$ based on comparison between a current detection signal $V_i$ of a motor current $I_m$ and a target value signal $V_{ref}$, a latch circuit **500** which latches a current detection result based on the drive command signal $V_s$ and the comparison output signal $V_c$, and a gate circuit **600** for driving the motor drive circuit **100** based on the drive command signal $V_s$ and a latch output signal $V_r$ output from the latch circuit **500**.

In this configuration, the motor drive circuit **100** has a bridge circuit **150** controlling on/off of the current $I_m$ flowing through the motor **110** and a drive circuit **200** for driving the bridge circuit **150**. Meanwhile, the microcomputer **300** is configured to determines the state of the latch output signal $V_r$ on the basis of time measured based on the drive command signal $V_s$ and thus to detect a failure of a current feedback system which is composed of the current feedback circuit **400** and the latch circuit **500**.

The bridge circuit **150** is composed of four MOSFETs and has a bridge configuration in which the motor **110** is connected between a FET **1** and a FET **3** and between a FET **2** and a FET **4.** By turning on the FETs **1** and **4** and turning off the FETs **2** and **3,** a motor current flows in a direction of $I_m$ shown in **FIG.2** and the motor **110** runs forward. Conversely, by turning off the FETs **1** and **4** and turning on the FETs **2** and **3,** the motor current flows in a reverse direction and the motor **110** runs backward. The rotation of the motor **110** is controlled by a combination and timing of ON/OFF of the MOSFETs. Note that, the combination and timing of ON/OFF of the MOSFETs are controlled by predetermined on/off signals input from the drive circuit **200** and the gate circuit **600**.

The drive circuit **200** is connected to the gate circuit **600** on the input side and is connected to the bridge circuit **150** on the output side. Switching of each FET is controlled based on driving signals $V_{d1}$ and $V_{d2}$ output from the gate circuit **600** and an electric current then flows from supply voltage **12**V to the bridge circuit **150** and the motor **110.**

The microcomputer **300** is a single chip microcomputer as a control unit which is provided with a drive command signal generator **310** generating the drive command signal $V_s$ for driving the motor **110,** Pch direction instruction portions **320,** Nch FET control signal generators **330,** a latch output signal input portion **340,** a current command value generator **350** and a timer unit **360,** etc.

The drive command signal generator **310** generates the drive command signal $V_s$ as a PWM (Pulse Width Modulation) signal for driving the motor **110.** Using, e.g., a PWM function, etc., of the microcomputer **300,** the drive command signal $V_s$ during motor drive command time T**1** is generated by inverting an output between Hi-level and Lo-level at regular intervals. The drive command signal $V_s$ as an output is connected to the latch circuit **500** and the gate circuit **600.**

The Pch direction instruction portions **320** output motor drive direction control signals $V_{m1}$ and $V_{m2}$ which are signals for controlling the rotation direction of the motor **110.** The motor drive direction control signals $V_{m1}$ and $V_{m2}$ are input to AND circuits **610** of the gate circuit **600.**

The Nch FET control signal generators **330** output Nch FET control signals $V_{F1}$ and $V_{F2}$ which are signals for controlling the rotation direction of the motor **110.** Hi or Lo-level of the Nch FET control signals $V_{F1}$ and $V_{F2}$ are input to the FETs **3 and 4** at a predetermined timing to control ON/OFF of the MOSFETs. The bridge circuit **150** is controlled by a combination of the Nch FET control signals $V_{F1}$ and $V_{F2}$ with the motor drive direction control signals $V_{m1}$ and $V_{m2}$, thereby controlling the rotation direction of the motor **110.**

The latch output signal $V_r$ output from the latch circuit **500** is input to the feedback input portion **340.** The input latch output signal $V_r$ (= a current feedback signal) is further input to the timer unit **360** in the microcomputer.

The target value signal $V_{ref}$, which is DC voltage signal to the current feedback circuit **400** and is a reference voltage (threshold) of the comparator **420,** is input to the comparator **420** from the current command value generator **350.** By adjusting the target value signal $V_{ref}$, it is possible to control the motor current $I_m$ and thereby to adjust a steady rotation speed of the motor.

The timer unit **360** is built in the microcomputer **300.** The latch output signal $V_r$ is input to the timer unit **360** which then measures time elapsed from the rise of the drive command signal $V_s$.

The current feedback circuit **400** and the latch circuit **500** described below form the current feedback system from the motor **110** to the microcomputer **300.**

The current feedback circuit **400** is composed of the shunt resistor **410** and the comparator **420** which are connected in series with the motor **110.** The shunt resistor **410** is connected to the comparator **420** via a low-pass filter (LPF) **430.** Thus, unstable operation caused by noise or voltage ripple, etc., is suppressed. The comparison output signal $V_c$ is output based on comparison between the current detection signal $V_i$ of the motor current $I_m$ and the target value signal $V_{ref}$. The output of the current feedback circuit **400** is connected as the comparison output signal $V_c$ to the input of the latch circuit **500.** When, for example, the bridge circuit **150** is driven by turning on the drive circuit **200** and a current flows through the motor **110,** the same current ($I_m$) as that flowing through the motor **110** also flows through the shunt resistor **410** which is connected to the motor **110.** Due to the motor current $I_m$ flowing through a resistor Ra of the shunt resistor **410,** the current detection signal $V_i$ (= Ra x $I_m$) is generated at both ends of the shunt resistor **410.** The comparator **420** compares the current detection signal $V_i$ with the target value signal $V_{ref}$ generated by the current command value generator **350,** the comparison output signal $V_c$ is inverted and output when the target value signal $V_{ref}$ becomes less than the current detection signal $V_i$, and this comparison output signal $V_c$ is input to the latch circuit **500.**

The latch circuit **500** receives the drive command signal $V_s$ from the microcomputer **300** as well as the comparison output signal $V_c$ from the current feedback circuit **400,** and latches (holds) a current detection result based on the drive command signal $V_s$ and the comparison output signal $V_c$. The latch output signal $V_r$ is input to the latch output signal input portion **340** and is also input to the gate circuit **600** via a drive stopping Tr **620.**

The gate circuit **600** outputs the driving signals $V_{d1}$ and $V_{d2}$ based on the drive command signal $V_s$ as well as the latch output signal $V_r$ output from the latch circuit **500.** Since the rotation direction of the motor is also controlled in the present embodiment, the AND circuits **610** output the driving signals $V_{d1}$ and $V_{d2}$ as the logical AND of the drive command signal $V_s$ and the latch output signal $V_r$ or the motor drive direction control signals $V_{m1}$, $V_{m2}$. The drive circuit **200** is driven by the driving signals $V_{d1}$ and $V_{d2}$ and the motor **110** is powered on. Then, the rotation direction of the motor is controlled by the Nch FET control signal generators **330** in combination with gate control using the motor drive direction control signals $V_{m1}$ and $V_{m2}$.

Normal operation of motor drive unit **1**

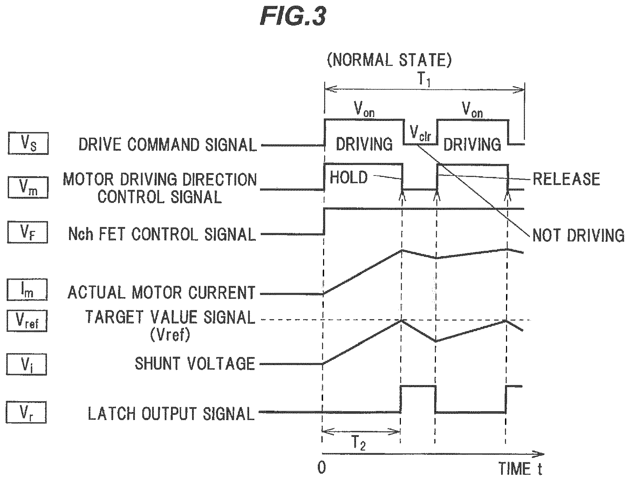

**FIG.3** is a diagram illustrating signal waveforms of respective portions during normal operation of the motor drive unit in the embodiment of the invention. The normal operation (constant-current control operation) of the motor drive unit **1** will be described in order of the following (**1**) to (**9**) along the waveforms at main points during normal operation shown in **FIG.3**.

(**1**) In the motor drive command time T**1**, the output of the drive command signal $V_s$ becomes Hi-level (ON signal $V_{on}$).

(**2**) The driving signals $V_{d1}$ and $V_{d2}$ are output from the gate circuit **600** to turn on the FETs **1** and **4** and off the FETs **2** and **3**.

(**3**) The current $I_m$ flows through the motor **110** and the current detection signal $V_i$ is generated by the shunt resistor **410**.

(**4**) The latch output signal $V_r$ becomes Hi-level when the current detection signal $V_i$ becomes more than the target value signal $V_{ref}$.

(**5**) Accordingly, the FETs **1** and **4** are turned off, the motor **110** stops running and the current detection signal $V_i$ becomes **0**.

(**6**) After a predetermined period of time, the drive command signal $V_s$ is switched to Lo-level (switched from the ON signal $V_{on}$ to a latch-clear signal $V_{clr}$).

(**7**) At the switching edge of the drive command signal $V_s$ from Hi to Lo-level (when switched to the latch-clear signal $V_{clr}$), the holding state of the latch circuit **500** is released.

(**8**) The driving signal $V_d$ continues staying Lo-level during the Lo-level period of the drive command signal $V_s$ (during the latch-clear signal $V_{clr}$ period).

(**9**) After a predetermined period of time, the drive command signal $V_s$ is switched to Hi-level (switched to the ON signal $V_{on}$).

From this onward, the operations of (**1**) to (**9**) are repeated in the motor drive command time T**1**. As shown in **FIG.3**, in the periods of (**3**) and (**5**), the motor **110** is driven with a constant current at a current value which is determined by the current feedback circuit **400** and corresponds to the target value signal $V_{ref}$, while an actual motor current repeats increase and decrease.

Operation of motor drive unit **1** in failure

In **FIG.3**, a motor current waveform during operation of the motor exponentially increases according to time constant. That is, when the motor is operated, a current flows through the motor **110** and then gradually increases due to resistance and coil component. The motor current $I_m$ is represented by the following formula:

$$\text{Motor current } I_m = (\text{supply voltage } 12V/\text{armature resistance}) \times (1\text{-}e^{-t}/\ \tau e)$$

where $\tau e$ is a ratio of inductance to armature resistance. Time T**2** to reach the target current set by the target value signal $V_{ref}$ during the operation of the motor is derived from the above formula.

In the present embodiment, when T**2**, which is derived as a period of time in which the current flows through the motor **110**, gradually increases due to the coil component and then reaches the target current (current feedback), satisfies the relation of Motor drive command time T**1** > T**2**, T**2** is set as current feedback detection time.

That is, when the output of the latch output signal $V_r$ is not inverted after the current feedback detection time T**2** is elapsed since the drive command signal $V_s$ is output from the microcomputer **300** to drive the motor **110** (during the motor drive command time T**1**), it is judged that the circuit is malfunctioning (a failure of the current feedback system) and the motor **110** is stopped by switching the drive command signal $V_s$ to Lo-level.

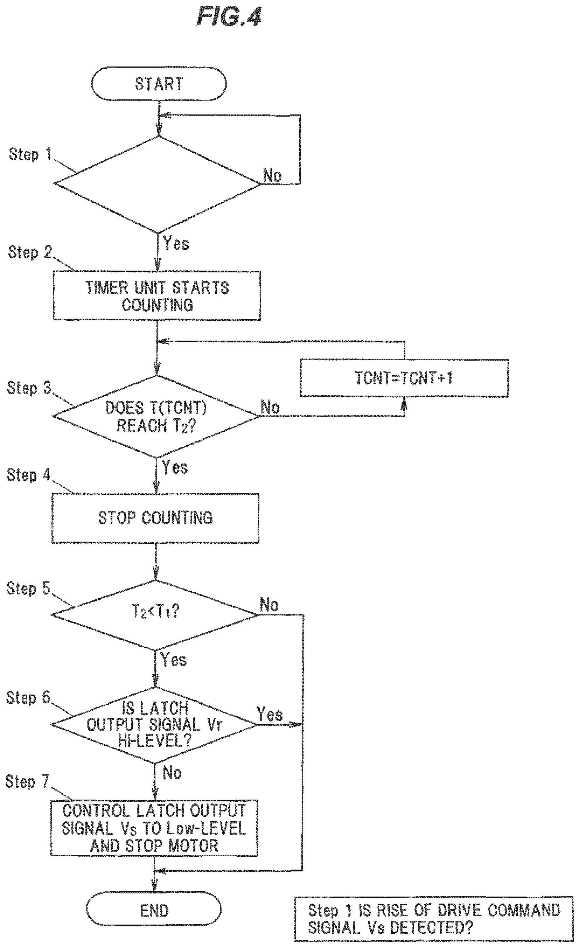

FIG.4 is a flowchart showing an operation to detect a failure of a current feedback system in the motor drive unit. A failure detection method using the microcomputer **300** will be described below based on the flowchart.

Firstly, the microcomputer **300** determines whether or not the rise of the drive command signal $V_s$ is detected (Step **1**). The process proceeds to Step **2** when the rise of the drive command signal $V_s$ is detected. Step **1** is repeated when the rise of the drive command signal $V_s$ is not detected.

In Step **2**, the timer unit **360** starts counting. The count is started in a state that an internal counter value TCNT is reset.

The timer unit **360** determines whether or not time T corresponding the counter value TCNT, i.e., T(TCNT), reaches the current feedback detection time T**2** (Step **3**). Step **3** is repeated after adding **1** to the counter value TCNT each time when T(TCNT) has not reached T**2**. The process proceeds to Step **4** when T(TCNT) reaches T2.

In Step **4**, the timer unit **360** stops counting.

The microcomputer **300** determines whether or not the relation of T**2** < Motor drive command time r**1** is satisfied (Step **5**). The failure determination flow is ended when the relation is not satisfied (NO). The process proceeds to Step **6** when the relation is satisfied (YES).

The microcomputer **300** determines whether or not the latch output signal $V_r$ is inverted and becomes Hi-level (Step **6**). The failure determination flow is ended in the case of YES. The process proceeds to Step **7** in the case of NO.

**[0039]** The microcomputer **300** controls the drive command signal $V_s$ to Low level and thereby stops the motor **110**. In other words, the microcomputer **300** determines that the current feedback system has failed, and then stops the drive command signal $V_s$ as a PWM signal at constant frequency which is then switched to Low level (Step **7**). This stops the motor **110** and provides safety in the event of failure.

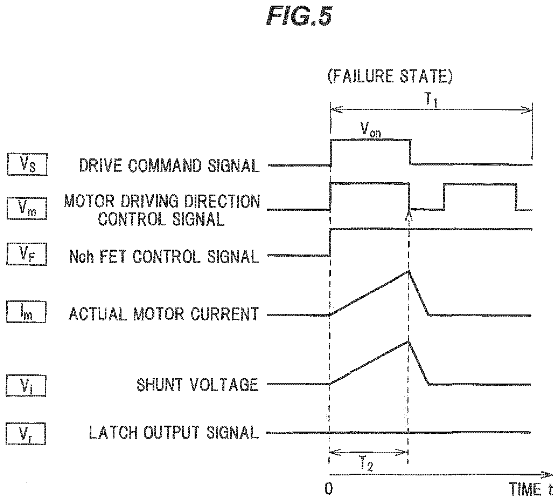

**FIG.5** is a diagram illustrating signal waveforms of respective portions when a failure occurs in the motor drive unit in the embodiment of the invention. The operation of the motor drive unit **1** when a failure occurs will be described in order of the following (**1**) to (**5**) along the waveforms at main points shown in **FIG.5**.

(**1**) In the motor drive command time T**1**, the output of the drive command signal $V_s$ becomes Hi-level (ON signal $V_{on}$).

(**2**) The driving signals $V_{d1}$ and $V_{d2}$ are output from the gate circuit **600** to turn on the FETs **1** and **4** and off the FETs **2** and **3**.

(**3**) The current $I_m$ flows through the motor **110** and the current detection signal $V_i$ is generated by the shunt resistor **410**.

(**4**) A failure occurs in the current feedback system. In other words, a failure occurs in the current feedback circuit **400** or the latch circuit **500.** Due to this failure, the latch output signal $V_r$ is not inverted even after the current feedback detection time T**2** is elapsed.

(**5**) The microcomputer **300** controls the drive command signal $V_s$ to Low level.

Accordingly, the driving signals $V_{d1}$ and $V_{d2}$ become Low level, the FETs **1** and **4** are turned off and the motor **110** stops running.

The motor **110** is stopped by the operations (**1**) to (**5**) when a failure occurs in the current feedback system.

Effects of the embodiment

The motor drive unit **1** configured as described achieves the following effects.

(**1**) In the motor drive unit **1** in the embodiment of the invention, time elapsed from the rise of the drive command signal $V_s$ is counted by the timer unit of the microcomputer **300,** detection of the inverted output of the latch output signal $V_r$ is carried out after elapsing the current feedback detection time T**2**, and a failure of the current feedback system is thereby detected. As a result, it is possible to provide a motor drive unit which can detect a failure of the current feedback system using a portion of the motor drive unit per se without separately providing a failure detection circuit.

(**2**) An electric current flows through the motor **110** even when a failure occurs in the current feedback system (the current feedback circuit **400,** the latch circuit **500**). Therefore, there is a risk that an overcurrent flows through the motor **110** in the event of failure. However, it is possible to prevent the overcurrent to the motor **110** by the present embodiment.

(**3**) The current feedback detection time T**2** can be changed depending on the operating environment such as temperature and it is possible to appropriately detect a failure by setting the optimum T**2**. In addition, by setting the current feedback detection time T**2** to be longer than the calculated time to reach the target current (calculated current feedback), it is possible to add a failure detection function without impairing normal current control operation.

(**4**) It is not necessary to separately provide a failure detection circuit. Therefore, it is possible to reduce space for circuit and this allows a substrate to be downsized and space for substrate to be effectively used.

(**5**) The reduction in the space for circuit, the downsizing of the substrate and the effective use of space for substrate described above provide an effect of improving the product cost.

Although the embodiment of the invention has been described, the embodiment is merely an example and the invention according to claims is not to be limited thereto. Although the motor drive unit which drives a motor by controlling on/off of a current has been described above, the present embodiment is applicable not only to the motor and is also applicable as a load driving device as long as activation of the load can be controlled by controlling on/off of the current. It is applicable to electromagnetic coils and heaters, etc., as the load other than motor, as long as it can be driven by an electric current.

In addition, this new embodiment and modifications thereof may be implemented in various other forms, and various omissions, substitutions and changes, etc., can be made without departing from the invention. In addition, all combinations of the features described in the embodiment are not necessary to solve the problem of the invention. Further, the embodiment and modifications thereof are included within the scope and gist of the invention and also within the invention described in the claims and the range of equivalency.

**Claims**

1.  A motor drive unit (1), comprising:

    a motor drive circuit (100) that drives a motor (110) by controlling on/off of current;
    a control unit (300) generating a drive command signal for driving the motor, wherein the control unit outputs the drive command signal for a motor drive command time T1;
    a current feedback circuit (400) that comprises a current detection resistor (410) and a comparator (420) connected in series with the motor and outputs a comparison output signal based on a comparison between a current detection signal of a motor current and a target value signal;
    a latch circuit (500) that latches a current detection result based on the drive command signal and the comparison output signal after a predetermined time T2 to reach a target current set by the target value signal during normal operation; and
    a gate circuit (600) for driving the motor drive circuit (100) based on the drive command signal and a latch output signal output from the latch circuit,
    wherein the control unit (300) detects a failure of a current feedback system comprising the current feedback circuit (400) and the latch circuit (500) by detecting an inversion of the latch output signal inputted to the control unit when the predetermined time T2 to reach a target current is less than the motor drive command time T1.

2.  The motor drive unit (1) according to claim 1, wherein, when a failure is detected, the control unit (300) changes the drive command signal to turn off the current flowing though the motor (110).

3.  The motor drive unit (1) according to claim 1 or 2, wherein the control unit (300) comprises a single chip microcomputer and

    wherein the time measured based on the drive command signal is measured by a timer unit (360) built in the single chip microcomputer.

4.  The motor drive unit (1) according to any one of claims 1 to 3, wherein the control unit (300) determines a failure when the latch output signal is not inverted after the measured time after the measured time reaches the time T2.

5.  The motor drive unit (1) according to any one of claims 1 to 3, wherein the control unit (300) terminates an operation of the failure detection when the latch output signal is inverted after the measured time after the measured time reaches the time T2.


**Patentansprüche**

1.  Motortreibeinheit (1), umfassend:

    eine Motortreibschaltung (100), die einen Motor (110) durch Ein/Aus-Steuern von Strom treibt;
    eine Steuereinheit (300), die ein Treibbefehlsignal zum Treiben des Motors erzeugt, wobei die Steuereinheit das Treibbefehlsignal für eine Motortreibbefehlzeit T1 ausgibt;
    eine Stomrückkopplungsschaltung (400), die einen Stromerfassungswiderstand (410) und einen Komparator (420) umfasst, die in Reihe mit dem Motor verbunden sind, und ein Vergleichsausgabesignal basierend auf einem Vergleich zwischen einem Stromerfassungssignal eines Motorstroms und einem Sollwertsignal ausgibt;
    eine Sperrschaltung (500), die ein Stromerfassungsergebnis basierend auf dem Treibbefehlsignal und dem Vergleichsausgabesignal nach einer vorbestimmten Zeit T2 sperrt, um einen Sollstrom zu erreichen, der durch das Sollwertsignal eingestellt wird, und zwar während Normalbetrieb; und
    eine Gateschaltung (600) zum Treiben der Motortreibschaltung (100) basierend auf dem Treibbefehlsignal und einem Sperrausgabesignal, das von der Sperrschaltung ausgegeben ist,
    wobei die Steuereinheit (300) einen Fehler eines Stromrückkopplungssystems, umfassend die Stromrückkopplungsschaltung (400) und die Sperrschaltung (500) durch Erfassen einer Inversion des Sperrausgabesignals, das in die Steuereinheit eingegeben ist, erfasst, wenn die vorbestimmte Zeit T2 zum Erreichen eines Sollstroms kleiner ist als die Motortreibbefehlszeit T1.

2.  Motortreibeinheit (1) nach Anspruch 1, wobei dann, wenn ein Fehler erfasst wird, die Steuereinheit (300) das Treibbefehlssignal ändert, um den durch den Motor (110) fließende Strom auszuschalten.

**3.** Motortreibeinheit (1) nach Anspruch 1 oder 2, wobei die Steuereinheit (300) einen Einzelchip-Mikrocomputer umfasst, und

wobei die Zeit, die basierend auf dem Treibbefehlssignal gemessen wird, durch eine Zeitgebereinheit (360) gemessen wird, die in den Einzelchip-Mikrocomputer eingebaut ist.

**4.** Motortreibeinheit (1) nach einem der Ansprüche 1 bis 3, wobei die Steuereinheit (300) einen Fehler bestimmt, wenn das Sperrausgabesignal nach der gemessenen Zeit nicht invertiert ist, nachdem die gemessene Zeit die Zeit T2 erreicht

**5.** Motortreibeinheit (1) nach einem der Ansprüche 1 bis 3, wobei die Steuereinheit (300) einen Betrieb der Fehlererfassung beendet, wenn das Sperrausgabesignal nach der gemessenen Zeit invertiert ist, nachdem die gemessene Zeit die Zeit T2 erreicht.

**Revendications**

**1.** Unité d'entraînement de moteur (1), comprenant :

un circuit d'entraînement de moteur (100) qui entraîne un moteur (110) en commandant l'alimentation/l'arrêt du courant ;
une unité de commande (300) générant un signal de commande d'entraînement pour entraîner le moteur, dans laquelle l'unité de commande délivre le signal de commande d'entraînement pour un temps de commande d'entraînement de moteur T1 ;
un circuit de rétroaction de courant (400) qui comprend une résistance de détection de courant (410) et un comparateur (420) reliés en série avec le moteur et délivre un signal de sortie de comparaison sur la base d'une comparaison entre un signal de détection de courant d'un courant de moteur et un signal de valeur cible ;
un circuit de verrouillage (500) qui verrouille un résultat de détection de courant sur la base du signal de commande d'entraînement et du signal de sortie de comparaison après un temps prédéterminé T2 pour atteindre un courant cible réglé par le signal de valeur cible au cours d'un fonctionnement normal ; et
un circuit de grille (600) pour entraîner le circuit d'entraînement de moteur (100) sur la base du signal de commande d'entraînement et d'un signal de sortie de verrouillage délivré par le circuit de verrouillage,
dans laquelle l'unité de commande (300) détecte une défaillance d'un système de rétroaction de courant comprenant le système de rétroaction de courant (400) et le circuit de verrouillage (500) par la détection d'une inversion du signal de sortie de verrouillage entré dans l'unité de commande lorsque le temps prédéterminé T2 pour atteindre un courant cible est inférieur au temps de commande d'entraînement de moteur T1.

**2.** Unité d'entraînement de moteur (1) selon la revendication 1, dans laquelle, lorsqu'une défaillance est détectée, l'unité de commande (300) change le signal de commande d'entraînement pour arrêter le courant s'écoulant à travers le moteur (110).

**3.** Unité d'entraînement de moteur (1) selon la revendication 1 ou 2, dans laquelle l'unité de commande (300) comprend un micro-ordinateur à puce unique et

dans laquelle le temps mesuré sur la base du signal de commande d'entraînement est mesuré par une unité de minuterie (360) intégrée au micro-ordinateur à puce unique.

**4.** Unité d'entraînement de moteur (1) selon l'une quelconque des revendications 1 à 3, dans laquelle l'unité de commande (300) détermine une défaillance lorsque le signal de sortie de verrouillage n'est pas inversé après le temps mesuré après que le temps mesuré atteint le temps T2.

**5.** Unité d'entraînement de moteur (1) selon l'une quelconque des revendications 1 à 3, dans laquelle l'unité de commande (300) termine une opération de la détection de défaillance lorsque le signal de sortie de verrouillage est inversé après le temps mesuré après que le temps mesuré atteint le temps T2.

## FIG.1

1 MOTOR DRIVE UNIT

300

Vs DRIVE COMMAND SIGNAL

$\overline{V_{m1}}$ Pch DIRECTION INSTRUCTION CW

$\overline{V_{m2}}$ Pch DIRECTION INSTRUCTION CCW

MICROCOMPUTER

$V_r$ LATCH OUTPUT SIGNAL

600 GATE CIRCUIT

$V_{d1}$ DRIVING SIGNAL CW

$V_{d2}$ DRIVING SIGNAL CCW

100

MOTOR DRIVE CIRCUIT

110

MOTOR

$V_i$

500

LATCH CIRCUIT

400

LPF

CURRENT COMMAND VALUE

$V_{ref}$

410 SHUNT RESISTOR

**FIG.2**

EP 2 843 831 B1

## FIG.3

11

# *FIG.4*

```
                        ┌──────────┐
                        │  START   │
                        └────┬─────┘
                             │ ◄──────────────────────┐
                             ▼                         │
Step 1             ◇ ─────────────────── No ──────────┘
                     
                             │ Yes
                             ▼
Step 2             ┌─────────────────────┐
                   │ TIMER UNIT STARTS   │
                   │     COUNTING        │
                   └──────────┬──────────┘
                              │  ◄──────────────────┐
                              ▼                      │
Step 3             ◇ DOES T(TCNT) ── No ──┐          │
                     REACH T₂?            │   ┌──────────────────┐
                              │           └──►│  TCNT=TCNT+1     │
                              │ Yes           └──────────────────┘
                              ▼
Step 4             ┌─────────────────────┐
                   │   STOP COUNTING     │
                   └──────────┬──────────┘
                              ▼
Step 5             ◇  T₂<T₁?  ── No ──────────┐
                              │ Yes            │
                              ▼                │
Step 6             ◇ IS LATCH ── Yes ──────────┤
                     OUTPUT SIGNAL Vr          │
                     Hi-LEVEL?                 │
                              │ No             │
                              ▼                │
Step 7    ┌───────────────────────────┐        │
          │ CONTROL LATCH OUTPUT      │        │
          │ SIGNAL Vs TO Low-LEVEL    │        │
          │ AND STOP MOTOR            │        │
          └───────────┬───────────────┘        │
                      │ ◄──────────────────────┘
                      ▼
               ┌──────────┐
               │   END    │
               └──────────┘
```

Step 5: $T_2 < T_1$?

Step 6: IS LATCH OUTPUT SIGNAL $V_r$ Hi-LEVEL?

Step 7: CONTROL LATCH OUTPUT SIGNAL $V_s$ TO Low-LEVEL AND STOP MOTOR

Step 3: DOES $T(TCNT)$ REACH $T_2$?

$TCNT = TCNT + 1$

┌────────────────────────────────────┐
│ Step 1 IS RISE OF DRIVE COMMAND     │
│ SIGNAL Vs DETECTED?                 │
└────────────────────────────────────┘

## FIG.5

(FAILURE STATE)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013182325 A
- JP 2013062721 A

- EP 0805555 A2